# EUROPÄISCHE PATENTSCHRIFT

(11) **EP 2 853 706 B1**
(45) Veröffentlichungstag und Bekanntmachung des Hinweises auf die Patenterteilung: **15.08.2018**
(21) Anmeldenummer: 14181412.9
(22) Anmeldetag: 19.08.2014
(51) Int. Cl.: F01N 3/20, F01N 3/02

(54) **Kühlelement und Abgasanlage, umfassend ein Kühlelement**
Cooling element and exhaust system, including a cooling element
Élément de refroidissement et installation de gaz d'échappement, comprenant un élément de refroidissement

(30) Priorität: 30.09.2013 DE 102013219801
(43) Veröffentlichungstag der Anmeldung: 01.04.2015
(73) Patentinhaber: Bayerische Motoren Werke Aktiengesellschaft, 80809 München (DE)
(72) Erfinder: Sauer, Juergen, 80937 Muenchen (DE); Schröder, Jürgen, 87600 Kaufbeuren (DE); Weese, Ivo Daniel, 85386 Eching (DE)

(56) Entgegenhaltungen:
- DE-A1-102010 041 166
- FR-A1- 2 820 341
- GB-A- 2 084 658

## Beschreibung

Die vorliegende Erfindung betrifft ein Kühlelement für eine Abgasanlage, insbesondere für einen Verbrennungsmotor. Weiterhin betrifft die Erfindung eine Abgasanlage, die insbesondere für einen Verbrennungsmotor verwendbar ist.

In Fahrzeugen werden oftmals Abgaswärmetauscher verwendet, die zwei Aufgaben erfüllen sollen. Zunächst soll die Wärme des Abgases, das durch Verbrennung von Treibstoff in einem Verbrennungsmotor erzeugt wird, verwendet werden, um Energie aus den Abgasen zurückzugewinnen. So kann beispielsweise mit Hilfe einer Wärmekraftmaschine Strom erzeugt werden. Auf diese Weise wird derzeit versucht, den Gesamtwirkungsgrad des Antriebs des Fahrzeugs zu verbessern. Ein Kühlelement gemäß dem Oberbegriff des Anspruchs 1 ist beispielsweise aus der GB 2 084 658 A bekannt.

Ein zweiter Effekt des Abgaswärmetauschers ist beispielsweise in der EP 1 295 740 B1 offenbart. Dieses Dokument zeigt auf, dass ein abgasreinigender Katalysator idealerweise in einem bestimmten Temperaturfenster zu betreiben ist. Um dieses Temperaturfenster einhalten zu können, muss das Abgas im üblichen Betrieb des Verbrennungsmotors meistens auf einer maximalen Temperatur gehalten werden. Somit ist normalerweise eine Kühlung des Abgases notwendig. Der Abgaswärmetauscher kann hier vorteilhafterweise dem Abgas Energie entziehen, so dass das Abgas innerhalb des Temperaturfensters des Katalysators bleibt. Auf diese Weise ist eine vollumfängliche Reinigung des Abgases von Schadstoffen möglich.

Um Abgaswärmetauscher zu realisieren, werden oftmals komplexe Klappenwärmetauscher bzw. Rohrbündelwärmetauscher eingesetzt, die auch einen Bypass aufweisen können, um den Grad der Abgaskühlung einstellen zu können. Derartige Konstruktionen sind jedoch sehr aufwändig und teuer und erlauben ebenso keinerlei Variation der Position der Kühlung innerhalb der Abgasanlage. Somit stellen die Abgaswärmetauscher einen erheblichen Konstruktionsaufwand bei einem Fahrzeug dar.

Es ist Aufgabe der Erfindung, ein Kühlelement für eine Abgasanlage bereitzustellen, das bei einfacher und kostengünstiger Fertigung und bei wartungsarmem Betrieb eine aufwandsarme Integration in die Abgasanlage ermöglicht. Weiterhin ist es Aufgabe der Erfindung, eine Abgasanlage bereitzustellen, die ein derartiges Kühlelement aufweist.

Gelöst wird die Aufgabe durch die Merkmale des Anspruchs 1. Die Unteransprüche haben vorteilhafte Weiterbildungen der Erfindung zum Inhalt.

Die Aufgabe wird somit gelöst durch ein Kühlelement, das zumindest einen Wärmetauscher, einen Zufluss und einen Abfluss umfasst. Der Zufluss ist derart ausgebildet, dass durch diesen ein Fluid zu dem Wärmetauscher zuführbar ist. Der Abfluss ist ausgebildet, dass das Fluid von dem Wärmetauscher abführbar ist. Somit ist innerhalb des Kühlelements ein Fluidstrom von dem Zufluss über den Wärmetauscher zu dem Abfluss möglich. Der Zufluss ist hierbei vollständig von dem Abfluss umgeben.

Das erfindungsgemäße Kühlelement zeichnet sich bevorzugt durch ein Gewinde aus, durch das der Wärmetauscher in ein Abgasrohr einer Abgasanlage einschraubbar ist. Somit ist eine sehr einfache und kostengünstige Integration des Kühlelements in das Abgasrohr möglich, da in dem Abgasrohr lediglich eine Öffnung und ein Gegengewinde vorhanden sein müssen. Dies kann bevorzugt an beliebigen Stellen der Abgasanlage der Fall sein, so dass das Kühlelement vorteilhafterweise an unterschiedlichen Stellen in die Abgasanlage integrierbar ist. Erfindungsgemäß ist der Wärmetauscher in eine Öffnung eines Abgasrohres der Abgasanlage einsetzbar. Der Wärmetauscher ist insbesondere durch ein beliebiges Fügeverfahren in das Abgasrohr einsetzbar. Insbesondere ist der Wärmetauscher in das Abgasrohr einschweißbar oder per Presspassung einfügbar. Somit ist das erfindungsgemäße Kühlelement eine einfache und robuste Lösung. In einer vorteilhaften Ausführungsform des Kühlelements ist der Zufluss und/oder der Abfluss bei eingesetztem Kühlelement außerhalb des Abgasrohrs angeordnet. Somit befindet sich bevorzugt nur ein Teilbereich des Kühlelements innerhalb des Abgasrohres, während ein anderer Teilbereich außerhalb des Abgasrohrs verbleibt. Auf diese Weise wird insbesondere das Fluid von außerhalb der Abgasanlage in die Abgasanlage hineingeführt, um die thermische Energie des Abgases aufzunehmen und diese anschließend aus der Abgasanlage abzuführen.

In einer besonders vorteilhaften Ausbildungsform des Kühlelements ist ein Eingriffsbereich vorhanden, der ein Verschrauben des Kühlelements durch Hilfsmittel ermöglicht. Insbesondere ist der Eingriffsbereich eine geometrische Form, die mit Werkzeugen greifbar ist. So kann der Eingriffsbereich insbesondere ein Mehrkant sein, so dass das Kühlelement sehr einfach in das Abgasrohr einschraubbar ist. Alternativ ist bevorzugt vorgesehen, dass der Eingriffsbereich eine geometrische Form aufweist, die nur mit einem speziellen Werkzeug zu greifen ist. Auf diese Weise ist vorteilhaft vorgesehen, dass der Wärmetauscher nur durch dazu Berechtigte entfernt bzw. eingesetzt werden kann.

Bevorzugt ist der Wärmetauscher des Kühlelements durch das Einsetzen des Kühlelements in das Abgasrohr zumindest teilweise im Inneren des Abgasrohrs anordenbar. Auf diese Weise ist der Wärmetauscher zumindest teilweise von einem Abgas, das innerhalb des Abgasrohres die Abgasanlage durchströmt, umströmbar. Daher kann der Wärmetauscher thermische Energie des Abgases aufnehmen und an das Fluid abgeben. Dazu ist besonders bevorzugt vorgesehen, dass das Fluid innerhalb des Wärmetauschers führbar ist. Insbesondere ist das Fluid innerhalb des Wärmetauschers derart führbar, dass dieses die Temperatur des Abgases vollständig übernimmt.

Als Alternative zu der besonders bevorzugten Ausführungsform, in der das Fluid innerhalb des Wärmetauschers führbar ist, ist nicht erfindungsgemäß vorgesehen, dass der Wärmetauscher ein Festkörperwärmeleiter ist. Der Festkörperwärmeleiter ist vorteilhafterweise von dem Fluid umströmbar. Hierbei ist der Bereich des Festkörperwärmeleiters, der von dem Fluid umströmbar ist, außerhalb des Abgasrohrs angeordnet, so dass das Fluid vollständig außerhalb des Abgasrohres verbleibt. Diese Ausführungsform hat einen sehr einfachen Aufbau des Wärmetauschers zur Folge, wodurch der Aufbau des Kühlelements einfach und kostengünstig ist.

Vorteilhafterweise ist erfindungsgemäß ein Dichtelement in dem Kühlelement vorhanden, wobei das Dichtelement insbesondere eingerichtet ist, das Abgasrohr bei eingesetztem Kühlelement abzudichten. Daher wird vermieden, dass Abgase durch Öffnungen im Abgasrohr austreten, in die das Kühlelement eingesetzt ist. Das Dichtelement ist insbesondere ein Festkörper, mit dem das Kühlelement zu dem Abgasrohr abdichtbar ist, oder alternativ eine Dichtmasse, mit der insbesondere das vorteilhaft vorhandene Gewinde abdichtbar ist.

Die Erfindung betrifft weiterhin eine Abgasanlage, die zumindest ein Kühlelement umfasst, wie es zuvor beschrieben wurde. Weiterhin umfasst die erfindungsgemäße Abgasanlage zumindest ein Abgasrohr, das eingerichtet ist, einen Strom von Abgasen abzuführen. Erfindungsgemäß weist das Abgasrohr eine Öffnung auf, in die das Kühlelement eingesetzt ist. Insbesondere ist das Kühlelement in das Abgasrohr durch eine Presspassung eingefügt oder durch eine Schweißverbindung in die Öffnung des Abgasrohrs eingesetzt. Somit kann der Platzbedarf des Kühlelements innerhalb der Abgasanlage sehr gering gehalten werden. Insbesondere ist keine Unterbrechung des Abgasrohres nötig und vorgesehen.

Das Abgasrohr weist bevorzugt ein Gegengewinde auf, in das das Gewinde des Kühlelements eingeschraubt ist. Durch den geringen Aufbau und die einfache Montage des erfindungsgemäßen Kühlelements ist es daher möglich, eine sehr flexible und einfache Abgasanlage zu schaffen. Die erfindungsgemäße Abgasanlage gemäß der bevorzugten Ausführungsform ist daher variabel aufbaubar, da insbesondere die Position des Kühlelements einfach variierbar ist.

So ist insbesondere vorgesehen, dass bei der Abgasanlage eine Abgasreinigungsvorrichtung zum Reinigen des Abgases vorhanden ist. Bevorzugt befindet sich die Abgasreinigungsvorrichtung stromabwärts des Kühlelements. Daher ist durch das Kühlelement die Abgastemperatur innerhalb der Abgasreinigungsvorrichtung steuerbar, so dass die Abgasreinigungsvorrichtung stets in einem optimalen Temperaturbereich betreibbar ist.

Die Abgasreinigungsvorrichtung ist bevorzugt ein Partikelfilter und/oder ein Katalysator. Derartige Bauteile weisen einen optimalen Arbeitsbereich auf, was bedeutet, dass das durchströmende Abgas idealerweise einen vorgegebenen Temperaturbereich einzuhalten hat. Durch das stromaufwärts Anbringen des erfindungsgemäßen Kühlelements ist daher das Abgas auf die geforderte Temperatur oder auf den geforderten Temperaturbereich abkühlbar, indem durch das Kühlelement Wärme aus dem Abgasstrom entnommen wird.

Weitere Einzelheiten, Merkmale und Vorteile der Erfindung ergeben sich aus der nachfolgenden Beschreibung und den Figuren. Es zeigen:
Figur 1 eine schematische Übersicht über die erfindungsgemäße Abgasanlage gemäß einem Ausführungsbeispiel der Erfindung,
Figur 2 eine schematische Darstellung einer Abgasanlage mit einem Kühlelement, nicht Teil der Erfindung.
Figur 3 eine schematische Darstellung der erfindungsgemäßen Abgasanlage mit einem Kühlelement gemäß einem Ausführungsbeispiel der Erfindung, und
Figur 4 eine schematische Darstellung einer Abgasanlage mit einem Kühlelement, nicht Teil der Erfindung.
Das erste Ausführungsbeispiel des Kühlelements wie in Figur 2 gezeigt, und das dritte Ausführungsbeispiel des Kühlelements wie in Figur 4 gezeigt, sind nicht vom Schutzumfang der Ansprüche umfasst und dienen lediglich als erklärendes Beispiel.

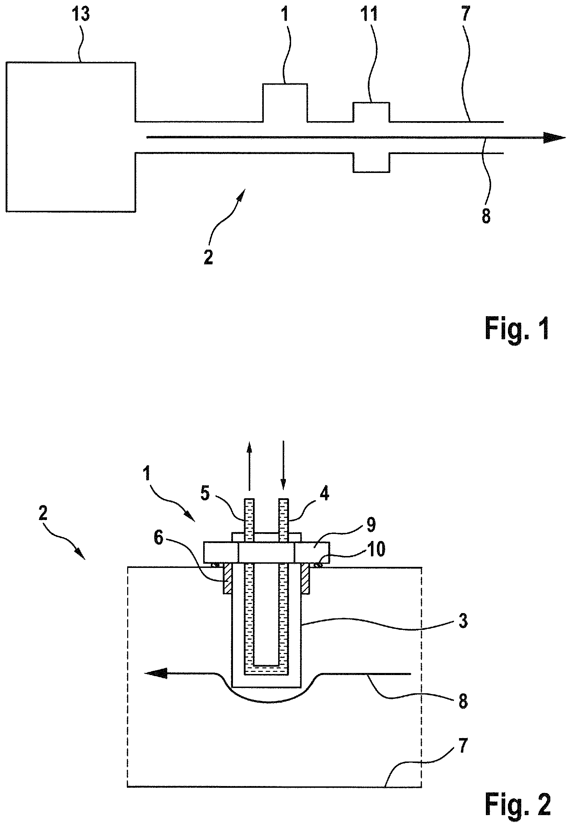

Die Ausführungsbeispiele gemäß Figuren 1 bis 4 zeigen Kühlelemente, die in die Abgasanlage eingeschraubt sind. Dies dient zur einfacheren Verdeutlichung der Erfindung und ist lediglich ein Beispiel, wie der Wärmetauscher des Kühlelements in das Abgasrohr der Abgasanlage einsetzbar ist. Das gezeigte Gewinde (6 in Figuren 2 bis 4) kann gemäß weiteren Ausführungsbeispielen der Erfindung durch einen Fügebereich ersetzt werden, der insbesondere eine Schweißverbindung oder eine Presspassung darstellt.

Figur 1 zeigt eine Abgasanlage 2 gemäß einem Ausführungsbeispiel der Erfindung. Die Abgasanlage 2 ist ausgebildet, einen Strom von Abgasen 8 von einer Verbrennungskraftmaschine 13 abzuführen. Dazu ist ein Kühlelement 1 vorhanden, das abgasstromaufwärts einer Abgasreinigungsvorrichtung 11 angeordnet ist. Die Abgasreinigungsvorrichtung 11 ist insbesondere ein Partikelfilter und/oder ein Katalysator. Der Strom von Abgasen 8 wird durch ein Abgasrohr 7 geführt. Das Abgasrohr 7 ist unterbrochen, um die Abgasreinigungsvorrichtung 11 einzufügen. Weiterhin ist das Kühlelement 1 in das Abgasrohr 7 eingeschraubt.

Die erfindungsgemäße Abgasanlage 2 ermöglicht es, die Abgase 8 vor dem Eintritt in die Abgasreinigungsvorrichtung 11 durch das Kühlelement 1 abzukühlen. Somit ist einerseits Energie in Form von Wärme aus den Abgasen 8 entnehmbar, während zum anderen die Abgase 8 abgekühlt werden. Daher ist die Temperatur der Abgase 8 innerhalb der Abgasreinigungsvorrichtung 11 durch das Kühlelement 1 regelbar.

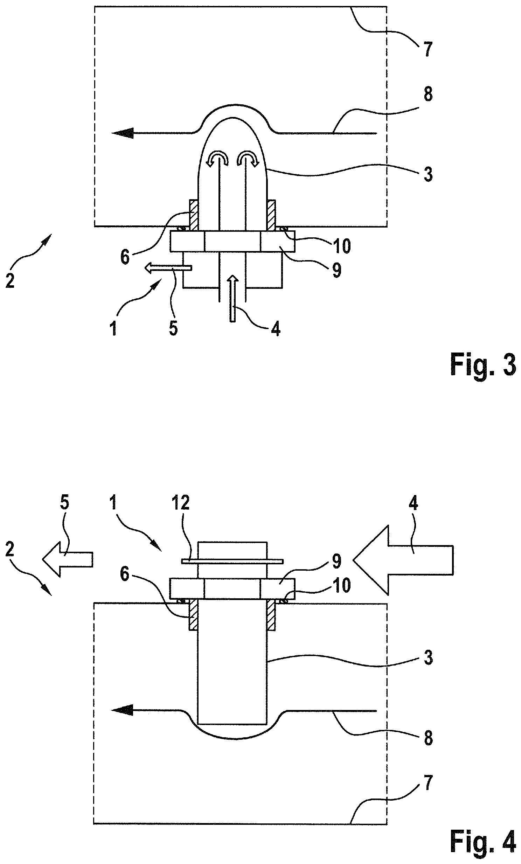

Die Figuren 3 und 4 zeigen verschiedene Ausführungsbeispiele des erfindungsgemäßen Kühlelements 1, wie es insbesondere in der Abgasanlage 2 aus Figur 1 einsetzbar ist.

Figur 2 zeigt einen Ausschnitt aus der Abgasanlage 2, wobei ein Kühlelement 1 verwendet ist. Das Kühlelement 1 umfasst einen Wärmetauscher 3, durch den ein Fluid geführt wird. Das Fluid tritt durch den Zufluss 4 in das Kühlelement 1 ein und durch einen Abfluss 5 aus dem Kühlelement 1 aus. Zwischen Zufluss 4 und Abfluss 5 ist das Fluid durch den Wärmetauscher 3 geführt.

Der Wärmetauscher 3 befindet sich vollständig innerhalb des Abgasrohrs 7. Somit ist der Wärmetauscher 3 vollständig von Abgasen 8 umströmbar, die innerhalb des Abgasrohrs 7 von der Verbrennungskraftmaschine 13 (vergleiche Figur 1) abgeführt werden.

Um den Wärmetauscher 3 innerhalb des Abgasrohrs 7 anzuordnen, ist das Kühlelement 1 in das Abgasrohr 7 eingeschraubt. Dazu ist ein Gewinde 6 an dem Kühlelement 1 vorhanden. Zum Einschrauben des Kühlelements 1 in das Abgasrohr 7 ist ein Eingriffsbereich 9 in Form einer Sechskantgeometrie vorhanden, so dass das Kühlelement 1 mittels beispielsweise eines Gabelschlüssels einschraubbar ist. Durch das Einschrauben des Kühlelements 1 in das Abgasrohr 7 befindet sich der Wärmetauscher 3 innerhalb des Abgasrohrs 7, während der Zufluss 4 und der Abfluss 5 außerhalb des Abgasrohrs 7 verbleiben. Somit erlaubt das Kühlelement 1 gemäß dem ersten Ausführungsbeispiel der Erfindung, ein als Kühlmittel fungierendes Fluid von außerhalb zuzuführen, dieses innerhalb des Abgasrohrs 7 aufzuheizen und anschließend wieder nach außerhalb abzuführen.

Um zu verhindern, dass Abgase 8 aus dem Abgasrohr 7 austreten, ist ein Dichtelement 10 vorhanden. Das Dichteelement 10 dichtet die Öffnung des Abgasrohrs 7, in die das Kühlelement 1 eingeschraubt ist, relativ zu dem Kühlelement 1 ab. Auf diese Weise ist keine Undichtigkeit im Abgasrohr 7 vorhanden. Die Abgase 8 können daher das Abgasrohr 7 nicht verlassen und müssen diesem folgen.

Figur 3 zeigt die Abgasanlage 2 aus Figur 1, wobei ein Kühlelement 1 gemäß der Erfindung verwendet ist. In der Darstellung wurden gleiche Bezugszeichen für diejenigen Bauteile verwendet, die auch bereits in dem ersten Ausführungsbeispiel des Kühlelements 1 vorhanden waren und eine gleiche Funktion innehaben. Erfindungsgemäß ist ein Zufluss 4 vorhanden, der vollständig von dem Abfluss 5 umgeben ist. Somit wird ein Gegenkühlprinzip umgesetzt: Das durch den Zufluss 4 in das Kühlelement 1 einströmende Fluid wird durch das heiße Fluid, das das Kühlelement 1 über den Abfluss 5 verlässt, vorgewärmt. Das so vorgewärmte Fluid tritt anschließend in den Wärmetauscher 3 ein, wobei sich der Wärmetauscher 3 wiederum vollständig innerhalb des Abgasrohrs 7 befindet. Daher wird das Fluid innerhalb des Wärmetauschers 3 durch umströmende Abgase 8 aufgeheizt, wobei das aufgeheizte Fluid auf dem Weg durch den Wärmetauscher 3 das frisch zuströmende Fluid umströmt und somit ebenso erwärmt. Abschließend wird das Fluid durch den Abfluss 5 aus dem Kühlelement 1 ausgegeben. Die Erfindung ermöglicht, eine größtmögliche Menge an Wärme aus den Abgasen 8 zu entnehmen und auf das Fluid zu übertragen. Somit weist das Kühlelement 1 gemäß dem zweiten Ausführungsbeispiel einen sehr hohen Wirkungsgrad auf. Eine effiziente Temperaturregelung des Abgases 8 ist daher möglich, indem der Strom des Fluids durch den Wärmetauscher 3 geregelt wird.

Ein weiteres Ausführungsbeispiel, nicht Teil der Erfindung, des Kühlelements 1 ist in Figur 4 gezeigt. Auch hier ist wiederum ein Ausschnitt aus der Abgasanlage 2 aus Figur 1 gezeigt.

Das Kühlelement 1 weist einen Wärmetauscher 3 auf, der ein Festkörperwärmeleiter ist. Der Festkörperwärmeleiter befindet sich teilweise innerhalb des Abgasrohrs 7 und teilweise außerhalb des Abgasrohrs 7. Somit ist der Wärmetauscher 3 nicht vollständig innerhalb des Abgasrohrs 7 angeordnet. Dadurch ist es möglich, das Fluid von dem Zufluss 4 zu dem Abfluss 5 strömen zu lassen, wobei das Fluid denjenigen Bereich des Festkörperwärmeleiters umströmt, der sich außerhalb des Abgasrohrs 7 befindet. Auf diese Weise wird der Teil außerhalb des Abgasrohrs 7 abgekühlt, wodurch ein Temperaturgefälle innerhalb des Festkörperwärmeleiters entsteht. Dies wird jedoch von dem Festkörperwärmeleiter aufgrund seiner Eigenschaft als Wärmeleiter ausgeglichen, so dass Energie in Form von Wärme aus dem Abgasrohr 7 hinaustransportiert wird. Der Wärmetauscher 3 fungiert daher auch in dem dritten Ausführungsbeispiel analog zu dem ersten und dem zweiten Ausführungsbeispiel, wobei jedoch im dritten Ausführungsbeispiel die Wärme nicht durch ein Fluid aus dem Abgasrohr 7 hinausgetragen wird, sondern durch einen Feststoff.

Um die Kühlung des Bereichs des Festkörperwärmeleiters, der sich außerhalb des Abgasrohrs 7 befindet, zu verbessern, ist eine Kühlrippe 12 vorgesehen. Diese Kühlrippe verbessert die Wärmeaufnahme des umströmenden Fluids, so dass eine optimale Wärmeabgabe von Wärmetauscher 3 an das Fluid sichergestellt ist. Insbesondere ist vorgesehen, dass mehrere Kühlrippen 12 verwendet werden, um einen idealen Wärmeübergang zu ermöglichen.

Das Ausführungsbeispiel des Kühlelements 1 stellt eine sehr montagearme Alternative dar. Da keinerlei Fluide durch das Abgasrohr 7 geführt werden müssen, ist der Konstruktionsaufwand und der Montageaufwand des Wärmetauschers 3 sehr gering. Dies erlaubt eine einfache und kostengünstige Bereitstellung der erfindungsgemäßen Abgasanlage 2.

### Bezugszeichenliste:

1 Kühlelement
2 Abgasanlage
3 Wärmetauscher
4 Zufluss
5 Abfluss
6 Gewinde
7 Abgasrohr
8 Abgase
9 Eingriffsbereich
10 Dichtelement
11 Abgasreinigungsvorrichtung
12 Kühlrippe

## Patentansprüche

1. Kühlelement (1) für eine Abgasanlage (2), umfassend
- zumindest einen Wärmetauscher (3),
- zumindest einen Zufluss (4), durch den ein Fluid dem Wärmetauscher (3) zuführbar ist, und
- zumindest einen Abfluss (5), über den das Fluid von dem Wärmetauscher (3) abführbar ist,
wobei der Wärmetauscher (3) in eine Öffnung eines Abgasrohres (7) der Abgasanlage (2) einsetzbar ist,
wobei durch das Einsetzen der Wärmetauscher (3) zumindest teilweise im Inneren des Abgasrohrs (7) anordenbar ist und somit von einem Abgas (8), das durch die Abgasanlage strömt, umströmbar ist,
**dadurch gekennzeichnet, dass**
der Zufluss (4) vollständig von dem Abfluss (5) umgeben ist.

2. Kühlelement (1) nach Anspruch 1, **gekennzeichnet durch** ein Gewinde (6), durch das der Wärmetauscher (3) in ein Abgasrohr (7) der Abgasanlage (2) einschraubbar ist.

3. Kühlelement (1) nach Anspruch 2, **gekennzeichnet durch** einen Eingriffsbereich (9), der ein Verschrauben des Kühlelements (1) durch Hilfsmittel ermöglicht.

4. Kühlelement nach einem der vorhergehenden Ansprüche, **dadurch gekennzeichnet, dass** der Zufluss (4) und/oder der Abfluss (5) bei eingesetztem Kühlelement (1) außerhalb des Abgasrohrs (7) verbleiben.

5. Kühlelement (1) nach einem der vorhergehenden Ansprüche, **dadurch gekennzeichnet, dass** das Fluid innerhalb des Wärmetauschers (3) führbar ist.

6. Kühlelement (1) nach einem der vorhergehenden Ansprüche, **gekennzeichnet durch** ein Dichtelement (10), wobei das Dichtelement (10) eingerichtet ist, das Abgasrohr (7) bei eingesetztem Kühlelement (1) abzudichten.

7. Abgasanlage (2), umfassend
- zumindest ein Kühlelement (1) nach einem der vorhergehenden Ansprüche, und
- zumindest ein Abgasrohr (7), das eingerichtet ist, einen Strom von Abgasen (8) abzuführen, wobei das Kühlelement (1) in eine Öffnung des Abgasrohres (7) eingesetzt ist.

8. Abgasanlage nach Anspruch 7 **dadurch gekennzeichnet, dass** das Abgasrohr (7) zumindest ein Gegengewinde aufweist und das Gewinde (6) des Kühlelements (1) in das Gegengewinde eingeschraubt ist.

9. Abgasanlage (2) nach einem der Ansprüche 7 oder 8 **gekennzeichnet durch** eine Abgasreinigungsvorrichtung (11) zum Reinigen des Abgases (8), wobei die Abgasreinigungsvorrichtung (11) stromabwärts des Kühlelements (1) angeordnet ist.

10. Abgasanlage (2) nach einem der Ansprüche 7 bis 10, **dadurch gekennzeichnet, dass** die Abgasreinigungsvorrichtung (11) ein Partikelfilter und/oder ein Katalysator ist.

11. Fahrzeug, umfassend eine Abgasanlage (2) nach einem der Ansprüche 8 bis 11.

## Claims

1. A cooling element (1) for an exhaust system (2), comprising
- at least one heat exchanger (3),
- at least one inflow (4) through which a fluid can be supplied to the heat exchanger (3), and
- at least one outflow (5) via which the fluid can be carried away from the heat exchanger (3),
wherein the heat exchanger (3) can be inserted into an opening of a exhaust pipe (7) of the exhaust system (2),
wherein due to the insertion the heat exchanger (3) can be arranged at least partially in the interior of the exhaust pipe (7) and thus the can be flowed around by an exhaust gas (8) which flows through the exhaust system,
**characterised in that**
the inflow (4) is surrounded completely by the outflow (5).

2. A cooling element (1) according to Claim 1, **characterised by** a thread (6), by means of which the heat exchanger (3) can be screwed into an exhaust pipe (7) of the exhaust system (2).

3. A cooling element (1) according to Claim 2, **characterised by** an engagement region (9) which permits screwing of the cooling element (1) by auxiliary means.

4. A cooling element according to one of the preceding claims, **characterised in that** the inflow (4) and/or the outflow (5) remain outside the exhaust pipe (7) when the cooling element (1) is inserted.

5. A cooling element (1) according to one of the preceding claims, **characterised in that** the fluid can be guided within the heat exchanger (3).

6. A cooling element (1) according to one of the preceding claims, **characterised by** a sealing element (10), the sealing element (10) being set up to seal off the exhaust pipe (7) when the cooling element (1) is inserted.

7. An exhaust system (2), comprising
- at least one cooling element (1) according to one of the preceding claims, and
- at least one exhaust pipe (7) which is set up to carry away a flow of exhaust gases (8), the cooling element (1) being inserted into an opening of the exhaust pipe (7).

8. An exhaust system according to Claim 7,
**characterised in that** the exhaust pipe (7) has at least one mating thread and the thread (6) of the cooling element (1) is screwed into the mating thread.

9. An exhaust system (2) according to one of Claims 7 or 8, **characterised by** an emission control device (11) for controlling the exhaust gas (8), the emission control device (11) being arranged downstream from the cooling element (1).

10. An exhaust system (2) according to one of Claims 7 to 10, **characterised in that** the emission control device (11) is a particulate filter and/or a catalytic converter.

11. A vehicle, comprising a exhaust system (2) according to one of Claims 8 to 10.

## Revendications

1. Elément de refroidissement (1) destiné à une installation de gaz d'échappement (2) comprenant :
- au moins un échangeur de chaleur (3),
- au moins une entrée (4) par laquelle un fluide peut être transféré dans l'échangeur de chaleur (3), et
- au moins une sortie (5) par laquelle le fluide peut être évacué de l'échangeur de chaleur (3),
l'échangeur de chaleur (3) pouvant être inséré dans une ouverture d'une tubulure (7) de l'installation de gaz d'échappement (2), de façon à permettre de le positionner au moins partiellement à la partie interne de la tubulure de gaz d'échappement (7) pour qu'il soit ainsi balayé par les gaz d'échappement (8) circulant dans l'installation de gaz d'échappement,
**caractérisé en ce que**
l'entrée (4) est totalement entourée par la sortie (5).

2. Elément de refroidissement (1) conforme à la revendication 1,
**caractérisé par**
un filetage (6) permettant de visser l'échangeur de chaleur (3) dans la tubulure de gaz d'échappement (7) de l'installation de gaz d'échappement (2).

3. Elément de refroidissement (1) conforme à la revendication 2,
**caractérisé par**
une zone de mise en prise (9) qui permet de visser l'élément de refroidissement (1) par des moyens auxiliaire.

4. Elément de refroidissement conforme à l'une des revendications précédentes,
**caractérisé en ce que**
l'entrée (4) et/ou la sortie (5) reste(nt) à l'extérieur de la tubulure de gaz d'échappement (7) lorsque l'élément de refroidissement (1) est inséré.

5. Elément de refroidissement (1) conforme à l'une des revendications précédentes
**caractérisé en ce que**
le fluide peut être transféré à la partie interne de l'échangeur de chaleur (3).

6. Elément de refroidissement (1) conforme à l'une des revendications précédentes
**caractérisé par**
un élément d'étanchéité (10), permettant d'assurer l'étanchéité de la tubulure de gaz d'échappement (7) lorsque l'élément de refroidissement (1) est inséré.

7. Installation de gaz d'échappement (2) comprenant :
- au moins un élément de refroidissement (1) conforme à l'une des revendications précédentes, et
- au moins une tubulure de gaz d'échappement (7) permettant d'évacuer un flux de gaz d'échappement (8), l'élément de refroidissement (1) étant inséré dans une ouverture de la tubulure de gaz d'échappement (7).

8. Installation de gaz d'échappement selon la revendication 7,
**caractérisée en ce que**
la tubulure de gaz d'échappement (7) comporte au moins un filetage antagoniste, et le filetage (6) de l'élément de refroidissement (1) est vissé dans la filetage antagoniste.

9. Installation de gaz d'échappement (2) conforme à l'une des revendications 7 et 8,
**caractérisée par**
un dispositif d'épuration des gaz d'échappement (11) permettant la purification des gaz d'échappement (8), le dispositif d'épuration des gaz d'échappement (11) étant monté en aval de l'élément de refroidissement (1).

10. Installation de gaz d'échappement (2) conforme à l'une des revendications 7 à 10,
**caractérisée en ce que**
le dispositif d'épuration des gaz d'échappement (11) est un filtre à particules et/ou un catalyseur.

11. Véhicule comprenant une installation de gaz d'échappement (2) conforme à l'une des revendications 8 à 11.
